Europäisches Patentamt

European Patent Office

Office européen des brevets

(19)

(11) Veröffentlichungsnummer: **0 025 995**
**B1**

(12) EUROPÄISCHE PATENTSCHRIFT

(45) Veröffentlichungstag der Patentschrift:
08.05.85

(21) Anmeldenummer: 80105656.5

(22) Anmeldetag: 22.09.80

(51) Int. Cl.⁴: **B 29 C 45/64**

(54) Aufspannvorrichtung für ein Spritzglesswerkzeug einer Spritzgiessmaschine.

(30) Priorität: 25.09.79 DE 2938665

(43) Veröffentlichungstag der Anmeldung:
01.04.81 Patentblatt 81/13

(45) Bekanntmachung des Hinweises auf die Patenterteilung:
08.05.85 Patentblatt 85/19

(84) Benannte Vertragsstaaten:
AT BE CH FR GB IT LI LU NL SE

(56) Entgegenhaltungen:
DE - C - 1 129 913
FR - A - 1 564 984
FR - A - 2 155 486
FR - A - 2 163 540
FR - A - 2 356 499

KUNSTSTOFFE, Band 70, Nr. 3, März 1980, Seiten
128-131 München, DE. H. DIEBEL:
"Produktionssteigerung beim Spritzgiessen durch
Verringern der Maschinen-Stillstandzeiten"

(73) Patentinhaber: Krauss-Maffei Aktiengesellschaft,
Krauss-Maffel-Strasse 2, D-8000 München 50 (DE)

(72) Erfinder: Vostrovsky, Ernst, Theodor-Heuss-Strasse 5,
D-8042 Oberschleissheim (DE)

## Beschreibung

Die Erfindung bezieht sich auf eine Aufspannvorrichtung für ein Spritzgießwerkzeug gemäß dem Oberbegriff des Patentanspruchs 1. Eine derartige Aufspannvorrichtung ist aus der FR-A-2 356 499 bekannt.

Üblicherweise werden geteilte Spritzgießformen (-werkzeuge) mit ihren jeweiligen Werkzeughälften an zugeordneten Aufspannplatten aufgespannt, welche zum Schließen der Spritzgießform aufeinander zubewegt und zum Öffnen der gefüllten Spritzgießform voneinander wegbewegt werden. Das Aufspannen der Werkzeughälften an den Aufspannplatten erfolgt meist mittels Schraubbolzen, welche in entsprechende Gewindebohrungen der Werkzeughälften und Aufspannplatten eingeschraubt werden. Das Wechseln (Umrüsten) eines Spritzgießwerkzeugs gestaltet sich dabei mühsam und zeitraubend.

Zur Beschleunigung des Aufspannvorgangs ist es aus der FR-A-2 356 499 bereits bekannt, an jeder Werkzeughälfte zwei diametral gegenüberliegende Zentrierstifte vorzusehen, welche durch entsprechende Zentrierbohrungen in den zugehörigen Aufspannplatten hindurchgeführt und im Bereich ihrer überstehenden Enden auf der Rückseite der Aufspannplatten festgespannt werden. Hierzu sind an der Rückseite jeder Aufspannplatte zwei hydraulisch betätigbare Spanneinrichtungen angebracht, welche jeweils zwei Spannbacken aufweisen, die gegen die abgeplattete zylindrische Umfangsfläche des jeweiligen Zentrierstiftendes gepreßt werden. Durch die Spanneinrichtungen auf den Rückseiten der Werkzeughälften wird deren Baulänge in unerwünschter Weise vergrößert. Schließlich setzt sich auf den überstehenden Enden der Zentrierstifte und den nur in größeren Zeitabständen betätigbaren Spanneinrichtungen Spritzgießmaterial ab, was zu Verklebungen der Spanneinrichtungen und damit zu Verzögerungen beim Werkzeugwechsel führen kann.

Die Aufgabe der Erfindung besteht darin, bei einer Aufspannvorrichtung der eingangs erwähnten Art auch bei hohen Schließkräften für das Werkzeug einen absolut rutschfesten Sitz der Werkzeugteile an den jeweiligen Aufspannplatten zu gewährleisten und gleichzeitig eine Verringerung der Baulänge sowie eine Verbesserung der Bedingungen für eine Umrüstung der Spritzgießwerkzeuge zu ermöglichen.

Diese Aufgabe wird erfindungsgemäß durch die kennzeichnenden Merkmale des Patentanspruchs 1 gelöst.

Eine vorteilhafte Ausgestaltung der Aufspannvorrichtung nach dem Patentanspruch 1 ergibt sich aus dem Unteranspruch.

Die Erfindung wird nachstehend an Hand eines in der Zeichnung dargestellten Ausführungsbeispiels näher erläutert. Es zeigt

Fig. 1 eine Stirnansicht einer Aufspannplatte als Teil einer Aufspannvorrichtung für ein Spritzgießwerkzeug, wobei der Zentrierflansch weggelassen wurde;

Fig. 2 einen vertikalen Teilquerschnitt durch die mit dem Zentrierflansch versehene Aufspannplatte nach Fig. 1, und

Fig. 3 einen vertikalen Querschnitt durch die beiden Aufspannplatten einer Aufspannvorrichtung einschließlich der daran befestigten Werkzeugteile.

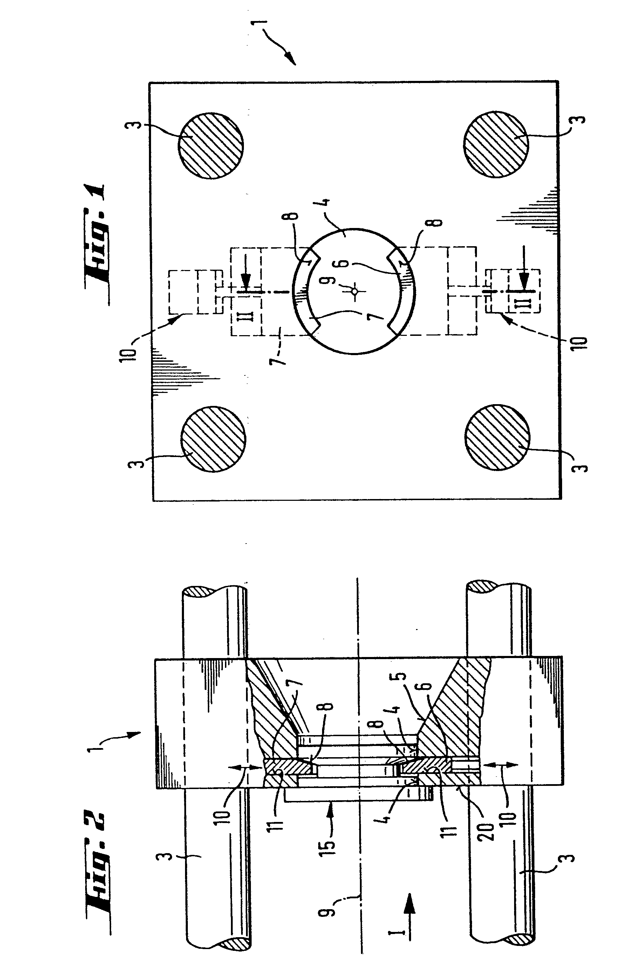

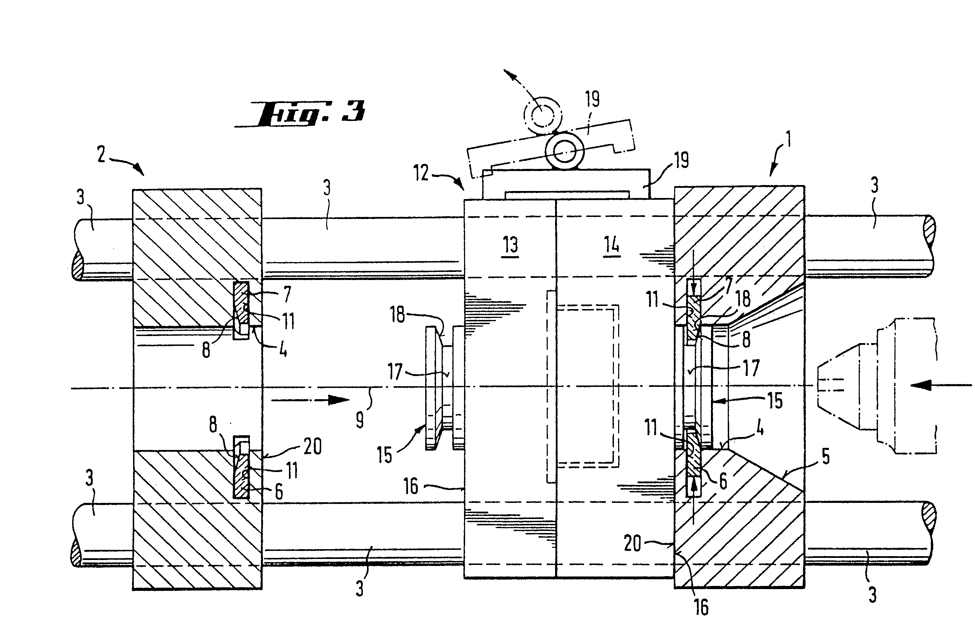

In Fig. 1 und 2 ist mit 1 eine der beiden Aufspannplatten einer Spritzgießmaschine bezeichnet, wobei offenbleiben kann, ob es sich um die ortsfeste oder um die bewegbare Aufspannplatte einer Spritzgießmaschine handelt. Die Aufspannplatte 1 wird auf vier Holmen 3 geführt und besitzt in der Mitte der formseitigen Stirnseite eine Zentrierbohrung 4, die sich etwa über die Hälfte der Dicke der Aufspannplatte 1 erstreckt und sich dann bis auf die andere Stirnseite konisch erweitert (konischer Teil 5). Aus der Mantelfläche der Zentrierbohrung 4 ragen von unten und von oben zwei in kreissegmentförmigen Enden ausmündende, in Führungen 11 gelagerte und einander gegenüberliegende Spannschieber 6, 7, die an einer Stirnseite im Endbereich zur Verschiebeachse 9 der Aufspannplatte 1 je eine schräge Spannfläche 8 aufweisen und die mittels je eines Hydraulikaggregats 10 so radial nach außen verschoben werden können, daß die Zentrierbohrung 4 einen freien Durchgang aufweist.

Fig. 3 zeigt wie die Fig. 1 und 2 die an den Holmen 3 geführte Aufspannplatte 1 mit der Zentrierbohrung 4 und deren konischem Teil 5 und die Spannschieber 6 und 7 mit den Spannflächen 8. Das Hydraulikaggregat 10 nach Fig. 1 ist nicht gezeichnet. Die zweite Aufspannplatte 2 weist ebenfalls zwei in Führungen 11 gelagerte Spannschieber 6 und 7 auf, die durch das nicht dargestellte Hydraulikaggregat in die Zentrierbohrung 4 hinein und aus ihr heraus verschoben werden können. Diese erstreckt sich hier über die gesamte Dicke der Aufspannplatte 2, was anzeigt, daß es sich um die bewegbare Aufspannplatte handelt, wogegen die Aufspannplatte 1 mit dem konischen Bohrungsteil 5 (zur besseren Heranführung des Spritzaggregats) ortsfest ist.

Ein Spritzgießwerkzeug 12 besteht aus zwei Teilen 13 und 14, die auf der Seite der Auflagefläche 16 für die Anlage an der Anlagefläche 20 der Aufspannplatte 1 bzw. 2 je einen Zentrierflansch 15 aufweist. Dieser ist mit einer Rundumspannrille 17 und ferner mit einer schrägen Spannfläche 18 versehen. Diese ist so ausgestaltet, daß sie dann, wenn der Zentrierflansch 15 in die Zentrierbohrung 4 eingesteckt ist, mit der Spannfläche 8 an den Spannschiebern 6 und 7 eine sichere Keilverbindung ergibt, wie es im rechten Teil der Fig. 3 dargestellt ist (form- und kraftschlüssige Verspannung zwischen Spritzgießwerkzeugteil 14 und der Aufspannplatte 1).

Beide Spritzgießwerkzeugteile 13 und 14 sind nach Fig. 3 mittels eines Bügels 19 zusammengehalten und können so transportiert werden.

Nachdem der Spritzgießwerkzeugteil 14 an der ortsfesten Aufspannplatte 1 festgespannt ist, wie es Fig. 3 zeigt, wird die Aufspannplatte 2 nach rechts verfahren, bis sie am Spritzgießwerkzeugteil 13 zur Anlage kommt. Dabei ist die Zentrierbohrung über den Zentrierflansch 15 gefahren, der nun mit Hilfe der Verschiebung der Spannschieber 6, 7 nach innen ebenfalls festgespannt wird. Sodann kann nach Lösen des Bügels 19 der Spritzbetrieb aufgenommen werden.

## Patentansprüche

1. Aufspannvorrichtung für ein Spritzgießwerkzeug an einer Spritzgießmaschine, insbesondere für die Kunststoffverarbeitung, mit zwei relativ zueinander bewegbaren Aufspannplatten (1, 2), an denen die Teile (13, 14) eines Spritzgießwerkzeugs (12) befestigbar sind, wobei zumindest eine Aufspannplatte eine in Bewegungsrichtung derselben verlaufende Zentrierbohrung (4) aufweist, in welche das Zugehörige, mit einem passenden Zentrierflansch (15) versehene Werkzeugteil einsteckbar ist, und mit einer Spanneinrichtung (6, 7), mittels welcher der Zentrierflansch (15) jeweils form- und kraftschlüssig bezüglich der Zentrierbohrung (4) gehalten wird, dadurch gekennzeichnet, daß zum Angreifen der Spanneinrichtung (6, 7) innerhalb der Zentrierbohrung (4) der Zentrierflansch (15) mit einer Rundumspannrille (17) versehen ist, welche zum freien Ende des Zentrierflansches (15) hin eine solche keilförmig schräge Spannfläche (18) aufweist, daß bei eingespanntem Werkzeugteil (13, 14) eine Spannfläche (8) der Spanneinrichtung (6, 7) zur Anlage kommt und das Werkzeugteil festspannt.

2. Aufspannvorrichtung nach Anspruch 1, dadurch gekennzeichnet, daß als Spanneinrichtung zwei hydraulisch antreibbare Spannschieber (6 und 7) vorgesehen sind, welche um die Zentrierbohrung (4) herum angeordnet sind, in die Zentrierbohrung (4) einschiebbar sind und sich dabei an den Zentrierflansch (15) anlegen.

## Claims

1. A fastening device for an injection moulding tool of an injection moulding machine, more particularly for the processing of synthetic resin, comprising to fastening plates (1 and 2) able to moved in relation to each other, for the parts (13 and 14) of an injection moulding tool (12) to be fixed to, at least one fastening plate having a centering hole (4) running in its direction of motion, for the mating tool part to b plugged into, which tool part has a matching centering flange (15), and a clamping means (6 and 7) to keep the centering flange (15) positively and with a force-fit in place in relation to the centering hole (4), characterized in that the centering flange (15) has a circumferential clamping proove (17) for engagement of the clamping means (6 and ') within the centering hole (4), said groove having towards the free end of the centering flange (15) such a wedge-like oblique clamping face (18) that when the tool part (13 and 14) is held in place one clamping face (8) of the clamping means (6 and 7) makes contact and clamps the tool part.

2. The fastening device as claimed in claim 1 characterized in that the fastening means is in the form of two hydraulically powered clamping slides (6 and 7), that are placed about the centering hole (4), may be moved into the centering hole (4) and thereby make contact with the centering flange (15).

## Revendications

1. Dispositif de serrage pour un outil de coulée par injection dans une machine de coulée par injection, notamment pour la mise en oeuvre de matières plastiques, comportant deux plaques de serrage 1, 2 mobiles l'une par rapport à l'autre et sur lesquelles peuvent être fixées les parties (13, 14) d'un outil de coulée par injection (12), auquel cas au moins un plaque de serrage comporte un trou de centrage (14) orienté dans sa direction de déplacement et dans lequel peut être engagée la partie d'outil associée pourvue d'une collerette de centrage adaptée (15), ainsi qu'un mécanisme de serrage (6, 7) à l'aide duquel la collerette de centrage (15) est maintenue respectivement par conjugaison de formes et de forces dans le trou de centrage (4), caratérisé en ce que, pour l'accrochage du mécanisme de serrage (6, 7) à l'intérieur du trou de centrage (4), la collerette de centrage (15) est pourvue d'une gorge périphérique (17), qui comporte en direction de l'extrémité libre de la collerette de centrage (15) une surface de serrage (18) inclinée en forme de coin de manière que, lors du blocage de la partie d'outil correspondante (13, 14), une surface de serrage (8) du mécanisme de serrage (6, 7) entre en contact avec elle et immobilise la partie d'outil.

2. Dispositif de serrage selon la revendication 1, caractérisé en ce que, comme mécanisme de serrage, il est prévu deux poussoirs de serrage (6 et 7) pouvant être actionnés hydrauliquement, qui sont disposés autour du trou de centrage (4), qui peuvent pénétrer dans le trou de centrage (4) et qui s'appliquent alors contre la collerette de centrage (15).

**Fig. 1**

**Fig. 2**

**Fig. 3**